# EUROPEAN PATENT APPLICATION

(11) **EP 4 742 418 A1**
(43) Date of publication of application: **13.05.2026**
(21) Application number: 24886208.8
(22) Date of filing: 29.10.2024
(51) Int. Cl.: H01M 50/451, H01M 50/446, H01M 50/42, H01M 50/426, H01M 50/46, H01M 50/403, H01M 10/052

(54) **SEPARATOR FOR ELECTROCHEMICAL DEVICE, MANUFACTURING METHOD THEREFOR, AND ELECTROCHEMICAL DEVICE COMPRISING SEPARATOR**

(30) Priority: 31.10.2023 KR 20230148006; 28.10.2024 KR 20240148548
(71) Applicant: LG Energy Solution, Ltd., Seoul 07335 (KR)
(72) Inventor: BAE, Dong Hun, Yuseong-gu 34122 (KR); SUNG, Dong Wook, Yuseong-gu 34122 (KR); KIM, Ji Eun, Yuseong-gu 34122 (KR); KIM, Kyung Tae, Yuseong-gu 34122 (KR); LEE, Yong Hyeok, Yuseong-gu 34122 (KR)
(74) Representative: Hoffmann Eitle
(86) International application number: PCT/KR2024/016670
(87) International publication number: WO 2025/095535

(57) **Abstract**

The present disclosure relates to a separator for an electrochemical device, a method for manufacturing the same and an electrochemical device including the separator, and more particularly, to a separator for an electrochemical device using different binders in a coating layer and patterning the coating layer, thereby reducing a difference between positive electrode adhesive strength and negative electrode adhesive strength, improving wetting and reducing resistance, a method for manufacturing the same and an electrochemical device including the separator.

## Description

### Technical Field

The present disclosure claims priority to and the benefits of Korean Patent Application Nos. 10-2023-0148006 and 10-2024-0148548 respectively filed with the Korean Intellectual Property Office on October 31, 2023 and October 28, 2024, the entire contents of which are incorporated herein by reference.

The present disclosure relates to a separator for an electrochemical device, a method for manufacturing the same and an electrochemical device including the separator. In particular, the present disclosure relates to a separator for an electrochemical device using different binders in a coating layer and patterning the coating layer, thereby reducing a difference between positive electrode adhesive strength and negative electrode adhesive strength, improving wetting and reducing resistance, a method for manufacturing the same and an electrochemical device including the separator.

### Background Art

Among components of an electrochemical device, a separator includes a polymer substrate having a porous structure located between a positive electrode and a negative electrode and separates the positive electrode and the negative electrode, and performs roles of preventing an electrical short-circuit between the two electrodes and allowing an electrolyte and ions to pass through. The separator itself does not participate in an electrochemical reaction, however, physical properties such as wetting for an electrolyte liquid, the degree of porosity and thermal shrinkage affect performance and safety of an electrochemical device.

Accordingly, in order to strengthen physical properties of a separator, a coating layer is added to a porous polymer substrate, and various methods to change properties of the coating layer have been attempted by adding various materials to the coating layer. For example, inorganic substances may be added to the coating layer to improve mechanical strength of the separator, or inorganic substances or hydrates may be added to the coating layer to improve flame retardancy and heat resistance of the polymer substrate.

A separator may be attached to an electrode through a lamination process, and in order to secure adhesive strength between the electrode and the separator, a polymer binder may be added to a composition for forming a coating layer of the separator.

Meanwhile, adhesive strength with an electrode may vary depending on components of the polymer binder, and there is a problem in that a phenomenon of electrochemical device folding occurs due to asymmetry in adhesive strength between a positive electrode and a negative electrode.

Furthermore, when adhesive strength with a positive electrode and adhesive strength with a negative electrode are both strong using an existing polymer binder, wetting for an electrolyte liquid decreases, and as a result, resistance of an electrochemical device may increase.

Accordingly, there have been demands for studies on a technology capable of minimizing asymmetry in adhesive strength with a positive electrode and a negative electrode while maintaining adhesive strength with the positive electrode and the negative electrode at a certain level.

### DISCLOSURE

### Technical Problem

The present disclosure is directed to providing a separator for an electrochemical device using binders having different adhesive strength for a positive electrode and a negative electrode in a coating layer and patterning the coating layer in order to prevent a phenomenon of separator folding caused by asymmetry in adhesive strength with the positive electrode and the negative electrode, and reduce resistance caused by a decrease in wetting, a method for manufacturing the same and an electrochemical device including the separator.

However, problems to be solved by the present disclosure are not limited to the above-mentioned problem, and other problems not mentioned will be clearly understood by those skilled in the art from the following description.

### Technical Solution

One embodiment of the present disclosure provides a separator for an electrochemical device, the separator including: a porous polymer substrate; and a coating layer provided on at least one surface of the porous polymer substrate and including a first polymer binder, a second polymer binder and inorganic particles, wherein a first surface portion including the first polymer binder and a second surface portion including the second polymer binder are alternately arranged on a surface of the coating layer.

According to one embodiment of the present disclosure, the first polymer binder may be a fluorine-based polymer binder.

According to one embodiment of the present disclosure, the second polymer binder may be a hybrid polymer of a fluorine-based polymer binder and an acryl-based polymer binder.

According to one embodiment of the present disclosure, an area of the second surface portion may be 40% or less based on a total surface area of the coating layer.

According to one embodiment of the present disclosure, positive electrode adhesive strength of the first surface portion may be greater than positive electrode adhesive strength of the second surface portion.

According to one embodiment of the present disclosure, negative electrode adhesive strength of the second surface portion may be greater than negative electrode adhesive strength of the first surface portion.

According to one embodiment of the present disclosure, the coating layer may have an average thickness of 0.5 µm or greater and 1.0 µm or less.

According to one embodiment of the present disclosure, a content of the first polymer binder may be 10 parts by weight or greater and 15 parts by weight or less with respect to 100 parts by weight of the coating layer.

According to one embodiment of the present disclosure, a content of the second polymer binder may be 10 parts by weight or greater and 15 parts by weight or less with respect to 100 parts by weight of the coating layer.

One embodiment of the present disclosure provides a method for manufacturing a separator for an electrochemical device, the method including providing a coating layer by alternately coating a first slurry including a first polymer binder and a second slurry including a second polymer binder on at least one surface of a porous polymer substrate, wherein a first surface portion including the first polymer binder and a second surface portion including the second polymer binder are alternately arranged on a surface of the coating layer.

According to one embodiment of the present disclosure, the providing of a coating layer may be performed using gravure coating, spray coating, slot die coating, bar coating or roll coating.

According to one embodiment of the present disclosure, a loading amount of the first slurry for a coating layer may be greater than 7 g/m² and 10 g/m² or less.

According to one embodiment of the present disclosure, a loading amount of the second slurry for a coating layer may be 4 g/m² or greater and 7 g/m² or less.

One embodiment of the present disclosure provides an electrochemical device including: a positive electrode; a negative electrode; and the separator described above interposed between the positive electrode and the negative electrode.

### Advantageous Effects

A separator for an electrochemical device according to one embodiment of the present disclosure uses binders having different adhesive strength for a positive electrode and a negative electrode in a coating layer and patterns the coating layer, thereby suppressing an increase in resistance caused by a decrease in wetting while maintaining adhesive strength with the positive electrode and the negative electrode.

A method for manufacturing a separator for an electrochemical device according to one embodiment of the present disclosure forms a coating layer having a constant thickness and a constant pattern by controlling a loading amount during coating, thereby reducing an increase in resistance caused by a decrease in wetting while maintaining adhesive strength with a positive electrode and a negative electrode.

### Brief Description of Drawings

FIG. 1 is a schematic diagram illustrating a separator according to one embodiment of the present disclosure.
FIG. 2 is an image showing a coating layer surface of Example 1 of the present disclosure.
FIG. 3 is an image showing a coating layer surface of Example 2 of the present disclosure.
FIG. 4 is an image showing a coating layer surface of Comparative Example 1 of the present disclosure.
FIG. 5 is an image showing a coating layer surface of Comparative Example 2 of the present disclosure.
FIG. 6 is an image showing a coating layer surface of Comparative Example 3 of the present disclosure.
FIG. 7 is an image showing a coating layer surface of Comparative Example 4 of the present disclosure.
FIGS. 8a to 8f sequentially show wetting states of Examples 1 and 2 of the present disclosure and Comparative Examples 1 to 4.

### Best Mode

In the present specification, a description of a certain part "including" certain components means that it may further include other components, and does not exclude other components unless particularly stated on the contrary.

In the present specification, "A and/or B" means "A and B, or A or B".

In the present specification, a description of being provided "on" one component means that another component may be further placed, and does not exclude another component being placed in between unless particularly stated on the contrary.

In the present specification, a property of "having pores" means that an object includes a plurality of pores, and by the structure of the pores being interconnected with each other, gaseous and/or liquid fluids may pass from one side to the other side of the object.

In the present specification, a separator has porous properties including a plurality of pores, and performs a role of a porous ion-conducting barrier allowing ions to pass through while blocking an electrical contact between a negative electrode and a positive electrode in an electrochemical device.

Hereinafter, embodiments of the present disclosure will be described in detail with reference to accompanying drawings. The drawings may be exaggerated, omitted or schematically illustrated in order to describe or emphasize the embodiments of the present disclosure.

Hereinafter, the present disclosure will be described in more detail.

One embodiment of the present disclosure provides a separator 100 for an electrochemical device, the separator including: a porous polymer substrate 110; and a coating layer 130 provided on at least one surface of the porous polymer substrate and including a first polymer binder, a second polymer binder and inorganic particles, wherein a first surface portion 131 including the first polymer binder and a second surface portion 133 including the second polymer binder are alternately arranged on a surface of the coating layer.

The separator for an electrochemical device according to one embodiment of the present disclosure uses binders having different adhesive strength for a positive electrode and a negative electrode in a coating layer and patterns the coating layer, thereby reducing an increase in resistance caused by a decrease in wetting while maintaining adhesive strength with the positive electrode and the negative electrode.

The separator for an electrochemical device according to one embodiment of the present disclosure is capable of improving adhesive strength between the polymer substrate and the coating layer by improving cohesiveness between the inorganic particles and the polymer binders.

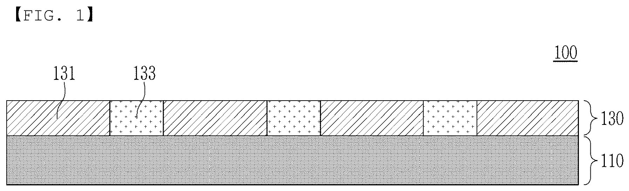

FIG. 1 is a schematic diagram of the separator 100 for an electrochemical device according to one embodiment of the present disclosure. The separator 100 for an electrochemical device, which is one embodiment of the present disclosure, will be specifically described with reference to FIG. 1.

According to one embodiment of the present disclosure, the porous polymer substrate 110 may be prepared using a polyolefin-based resin as a base resin. Examples of the polyolefin-based resin may include polyethylene, polypropylene, polypentene and the like, and the polyolefin-based resin may include one or more types thereof. A porous separator, that is, a separator having a plurality of pores, prepared using such a polyolefin-based resin as a base resin may provide a shutdown function at a proper temperature.

According to one embodiment of the present disclosure, the polyolefin-based resin may have a weight average molecular weight of 500,000 or greater and 1,500,000 or less. By adjusting the weight average molecular weight of the polyolefin-based resin in the above-described range, compression resistance of the separator may be improved. Furthermore, when different types of polyolefin-based resins are used after mixing or a separator having a multilayer structure formed with different types of polyolefin-based resins is formed, the weight average molecular weight of the polyolefin-based resin may be calculated by adding the weight average molecular weight of each of the polyolefin-based resins depending on the content ratio.

In the present disclosure, the weight average molecular weight (Mw) may be measured by gel permeation chromatography (GPC, PL GPC220, Agilent Technologies), and a condition for the measurement may be set as follows.
- Column: PL Olexis (Polymer Laboratories)
- Solvent: TCB (trichlorobenzene)
- Flow rate: 1.0 ml/min
- Sample concentration: 1.0 mg/ml
- Injection volume: 200 µl
- Column temperature: 160°C
- Detector: Agilent High Temperature RI detector
- Standard: Polystyrene (corrected by third order function)

According to one embodiment of the present disclosure, the porous polymer substrate 110 may be prepared using a method (wet method) in which a polyolefin-based resin is mixed with a plasticizer (diluent) at a high temperature to form a single phase, the polymer material and the plasticizer are phase-separated during a cooling process, and then the plasticizer is extracted to form pores, and elongation and heat setting treatments are performed.

According to one embodiment of the present disclosure, the separator 100 having the average pore size and the maximum pore size to accord with the scope of the present disclosure may be readily prepared by those skilled in the art through adjusting the mixing ratio of the plasticizer, the magnification of elongation, the heat setting treatment temperature and the like.

According to one embodiment of the present disclosure, the porous polymer substrate 110 may have a thickness of 1 µm or greater and 30 µm or less. Specifically, the porous polymer substrate 110 may have a thickness of 2 µm or greater and 28 µm or less, 3 µm or greater and 26 µm or less, 4 µm or greater and 24 µm or less, 5 µm or greater and 22 µm or less, 6 µm or greater and 20 µm or less, 7 µm or greater and 18 µm or less, 8 µm or greater and 16 µm or less, 9 µm or greater and 14 µm or less, or 9 µm or greater and 12 µm or less. By adjusting the thickness of the porous polymer substrate in the above-described range, a volume of the electrochemical device may be minimized, and a positive electrode and a negative electrode may be electrically insulated.

According to one embodiment of the present disclosure, the separator 100 for an electrochemical device includes a coating layer 130 provided on at least one surface of the porous polymer substrate 110. Specifically, the separator 100 for an electrochemical device includes a coating layer 130 provided on one or both surfaces of the porous polymer substrate 110. By the separator 100 for an electrochemical device including a coating layer 130 provided on at least one surface of the porous polymer substrate 110 as described above, heat resistance of the separator is improved, mechanical properties are improved, and an occurrence of electrical short-circuit of an electrode caused by shrinkage of the separator at a high temperature may be prevented.

According to one embodiment of the present disclosure, the coating layer 130 includes a first polymer binder, a second polymer binder and inorganic particles. By the coating layer 130 including a first polymer binder, a second polymer binder and inorganic particles as described above, heat resistance of the separator is improved, mechanical properties are improved, an occurrence of electrical short-circuit of an electrode caused by shrinkage of the separator at a high temperature may be prevented, and pores may be formed inside the coating layer.

According to one embodiment of the present disclosure, the coating layer may be formed using a composition for forming a coating layer including the inorganic particles and the polymer binder mixture. By using a composition for forming a coating layer including the inorganic particles and the polymer binder mixture as described above, convenience of the work for forming the coating layer may be improved, and viscosity of the composition for forming a coating layer may be readily adjusted.

According to one embodiment of the present disclosure, the composition for forming a coating layer may further include a solvent. By the composition for forming a coating layer further including a solvent as described above, convenience of the work for forming the coating layer may be improved, and the inorganic particles and the polymer binder mixture may be uniformly dispersed in the composition for forming a coating layer. In the present specification, the solvent may mean a dispersion medium, and an emulsion in which the inorganic particles and the polymer binder mixture are dispersed by the solvent may mean the composition for forming a coating layer.

According to one embodiment of the present disclosure, the solvent may be one selected from the group consisting of water, acetone, ethanol, isopropyl alcohol (IPA), dimethylacetamide (DMAc), dimethylformamide (DMF), N-methyl-2-pyrrolidone (NMP), acetonitrile and combinations thereof. Specifically, the solvent is preferably water. By selecting the solvent from those described above, viscosity of the composition for forming a coating layer is controlled, and dispersibility of the inorganic particles and the polymer binders may be improved in the solvent.

According to one embodiment of the present disclosure, the composition for forming a coating layer may further include an additive. By the composition for an inorganic coating layer further including an additive as described above, binding force of the inorganic particles is improved, and dispersibility of the composition for an inorganic coating layer may be improved.

According to one embodiment of the present disclosure, the additive may include a dispersant, a surfactant, an antifoaming agent, a flame retardant, an adhesive strength promoter and the like. By selecting the additive from those described above, dispersibility and phase stability of the composition for an inorganic coating layer may be improved, air bubbles may be removed or flame retardancy may be added, adhesive strength may be improved, and wetting of the polymer substrate and the composition for forming a coating layer may be improved.

According to one embodiment of the present disclosure, the dispersant may include any one or more selected from among polyacrylic acids, oil-soluble polyamines, oil-soluble amine compounds, fatty acids, fatty alcohols, sorbitan fatty acid esters, tannic acid and pyrogallic acid. Preferably, the dispersant may be sodium carboxymethyl cellulose (CMC-Na). By selecting the dispersant from those described above, dispersibility and phase stability of the composition for a coating layer may be improved.

According to one embodiment of the present disclosure, the content of the dispersant may be greater than 0 part by weight and 5 parts by weight or less with respect to 100 parts by weight of the composition for forming a coating layer. Specifically, the content of the dispersant may be greater than 0 part by weight and 4 parts by weight or less, 1 part by weight or greater and 3 parts by weight or less, or 1 part by weight or greater and 2 parts by weight or less with respect to 100 parts by weight of the composition for forming a coating layer. By adjusting the content of the dispersant in the above-described range, dispersibility and phase stability of the composition for forming a coating layer may be improved.

According to one embodiment of the present disclosure, the coating layer 130 includes a plurality of pores. Specifically, the coating layer 130 includes a plurality of micropores. The plurality of pores may be a plurality of micropores resulting from an interstitial volume formed between the inorganic particles as the coating layer is densely filled with the polymer binders included in the polymer binder mixture and the inorganic particles. These micropores are connected to each other, and a porous structure allowing gas or liquid to pass from one side surface to the other side surface is obtained. By the coating layer 130 including a plurality of pores as described above, an electrolyte liquid in a battery to be described later is allowed to permeate the separator.

According to one embodiment of the present disclosure, the inorganic particles are not particularly limited as long as they are electrochemically stable. In other words, the inorganic particles are not particularly limited as long as they do not undergo oxidation and/or reduction reactions in the operating voltage range (for example, 0 V to 5 V based on Li/Li⁺) of an applied electrochemical device. Particularly, when inorganic particles having an ion transfer ability are used, improvement in the performance may be provided by increasing ion conductivity in an electrochemical device. In addition, when inorganic particles having a high dielectric constant are used as the inorganic particles, ion conductivity of an electrolyte liquid may be improved by contributing to an increase in the degree of dissociation of an electrolyte salt such as a lithium salt in the liquid electrolyte. The inorganic particles may include high-dielectric constant inorganic particles having a dielectric constant of 5 or greater and 10 or greater, inorganic particles having a lithium ion transfer ability, or mixtures thereof. Specifically, the inorganic particles may be one selected from the group consisting of BaSO₄, BaTiO₃, Pb(Zr, Ti)O₃ (PZT), b1-xLaxZr1-yTiyO₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, SiC, Al(OH)₃, TiO₂, aluminum peroxide, zinc tin hydroxide (ZnSn(OH)₆), tin-zinc oxide (Zn₂SnO₄, ZnSnO₃), antimony trioxide (Sb₂O₃), antimony tetroxide (Sb₂O₄), antimony pentoxide (Sb₂O₅), boehmite (AlO(OH)) and combinations thereof, however, these are just an example, and the inorganic particles are not limited thereto.

According to one embodiment of the present disclosure, an average particle diameter (D50) of the inorganic particles (not shown) is not particularly limited, but is preferably in a range of 0.3 µm or greater and 1 µm or less for forming a coating layer 130 with a uniform thickness and proper porosity. Specifically, when the average particle diameter is less than 0.3 µm, dispersibility of the inorganic particles in the slurry prepared for preparing the coating layer may be reduced, and when the average particle diameter is greater than 1 µm, the thickness of the formed coating layer may increase.

In the present specification, the "D₅₀ particle diameter" means a particle diameter at a 50% point in cumulative distribution of the number of particles depending on the particle diameter. The particle diameter may be measured using a laser diffraction method. Specifically, a powder to be measured is dispersed in a dispersion medium and then introduced to a commercially available laser diffraction particle size measurement device (for example, Microtrac S3500), and a difference in the diffraction pattern depending on the particle size is measured when the particles pass through the laser beam to calculate particle size distribution. The D₅₀ particle diameter may be measured by calculating a particle diameter at a 50% point in cumulative distribution of the number of particles depending on the particle diameter in the measurement device.

According to one embodiment of the present disclosure, the content of the inorganic particles may be 70 parts by weight or greater and 90 parts by weight or less with respect to 100 parts by weight of the composition for a coating layer. Specifically, the content of the inorganic particles may be 75 parts by weight or greater and 90 parts by weight or less, 77 parts by weight or greater and 89 parts by weight or less, 79 parts by weight or greater and 88 parts by weight or less, 80 parts by weight or greater and 87 parts by weight or less, 82 parts by weight or greater and 86 parts by weight or less, or 84 parts by weight or greater and 86 parts by weight or less with respect to 100 parts by weight of the composition for a coating layer. By adjusting the content of the inorganic particles in the above-described range, insulation and heat resistance of the separator may be improved, preventing a phenomenon of separator shrinkage at a high temperature.

According to one embodiment of the present disclosure, a first surface portion 131 including the first polymer binder and a second surface portion 133 including the second polymer binder are alternately arranged on the surface of the coating layer 130. By the first surface portion 131 including the first polymer binder and the second surface portion 133 including the second polymer binder being alternately arranged on the surface of the coating layer 130 as described above, constant adhesive strength with electrodes may be maintained by including a portion having different adhesive strength for a positive electrode and a negative electrode, and wetting with an electrolyte liquid may be improved as well.

According to one embodiment of the present disclosure, the first polymer binder and the second polymer binder may be a particle-type binder or a dissolved-type binder. Specifically, the particle-type binder has a property of maintaining its original particle shape without being deformed even when dispersed in a solvent, and for example, polyvinylidene-based or acryl-based polymers may correspond thereto. The dissolved-type binder may be dissolved in a polar solvent including water, and for example, polyvinyl alcohol (PVA), polyvinylpyrrolidone (PVP) or polyacrylamide (PAM) may correspond thereto. Preferably, the first polymer binder and the second polymer binder may be a particle-type binder.

According to one embodiment of the present disclosure, the first polymer binder may be a fluorine-based polymer binder. By selecting a fluorine-based polymer binder as the first polymer binder as described above, porosity of the separator may be maintained, and adhesive strength may be maintained even when the coating layer is wet by an electrolyte liquid after activating a battery.

According to one embodiment of the present disclosure, the second polymer binder may be a hybrid polymer of a fluorine-based polymer binder and an acryl-based polymer binder. By selecting a hybrid polymer of a fluorine-based polymer binder and an acryl-based polymer binder as the second polymer binder, wetting by an electrolyte liquid may be improved, and battery resistance may be reduced.

According to one embodiment of the present disclosure, the fluorine-based polymer binder may be a PVDF-based polymer binder. The PVDF-based polymer is a polymer including vinylidene fluoride as a polymerization unit. The PVDF-based polymer may include a homopolymer of vinylidene fluoride (that is, polyvinylidene fluoride), a copolymer of vinylidene fluoride and another polymerizable monomer (comonomer), or a mixture of two or more thereof.

The comonomer may be one or more types selected from the group consisting of tetrafluoroethylene, hexafluoropropylene, trifluoroethylene, chlorofluoroethylene, 1,2-difluoroethylene, perfluoro(methylvinyl)ether, perfluoro(ethylvinyl)ether, perfluoro(propylvinyl)ether, difluoro(1,3-dioxol), perfluoro(2,2-dimethyl-1,3-dioxol), trichloroethylene and vinyl fluoride. Nonlimiting examples of the PVDF-based polymer may include polyvinylidene fluoride, polyvinylidene fluoride-co-hexafluoropropylene, polyvinylidene fluoride-co-trichloroethylene, polyvinylidene fluoride-co-tetrafluoroethylene, polyvinylidene fluoride-co-trifluoroethylene, polyvinylidene fluoride-co-trifluorochloroethylene, polyvinylidene fluoride-co-ethylene and the like, and one type, or a mixture of two or more types thereof selected from among these may be used. Preferably, the PVDF-based polymer may be a copolymer of polyvinylidene fluoride and hexafluoropropylene (PVdF-HFP).

In the present specification, the content of the comonomer in the vinylidene fluoride-based polymer resin may be measured by a method of 1H-NMR using Varian 500 MHz. For detailed measurement method, Journal of Materials Chemistry, 2012, 22, 341 or AMT-3412-0k may be referred to. In order to identify the NMR spectrum, proper equipment such as Bruker Avance III HD 700 Mhz NMR or Varian 500 MHz NMR may be used.

According to one embodiment of the present disclosure, the acryl-based polymer binder is a polymer including a carboxylic acid ester as a repeating unit, and may specifically be a (meth)acrylic acid ester. More specifically, the (meth)acrylic acid ester may be one selected from the group consisting of methyl (meth)acrylate, ethyl (meth)acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, hydroxymethyl (meth)acrylate, hydroxyethyl (meth)acrylate, ethylene glycol (meth)acrylate, ethylene glycol di(meth)acrylate, propylene glycol di(meth)acrylate, trimethylolpropane tri(meth)acrylate, pentaerythritol tetra (meth) acrylate, dipentaerythritol hexa(meth)acrylate, allyl (meth)acrylate, ethylene di(meth)acrylate and combinations thereof. Preferably, the (meth)acrylic acid ester is one or more selected from methyl (meth)acrylate, ethyl (meth)acrylate and 2-ethylhexyl (meth)acrylate.

According to one embodiment of the present disclosure, the second polymer binder may include a PVDF-based polymer binder and an acryl-based polymer binder. Preferably, the second polymer binder may include polyvinylidene fluoride-hexafluoropropylene (PVDF-HFP) and an acryl-based binder, and may include these in a weight ratio of 5:5 to 7:3. Preferably, the weight ratio may be 5:5.

According to one embodiment of the present disclosure, the acryl-based polymer resin may be a copolymer including styrene and acrylate in a weight ratio of 5:5 to 7:3. According to one embodiment of the present disclosure, the acrylate copolymerized with the styrene may be butyl acrylate.

According to one embodiment of the present disclosure, the first polymer binder may be a fluorine-based polymer binder, which may be the same as the fluorine-based polymer included in the second polymer binder.

According to one embodiment of the present disclosure, the area of the second surface portion may be 40% or less based on the total surface area of the coating layer. Specifically, the area of the second surface portion may be greater than 0% and 40% or less, 5% or greater and 40% or less, 10% or greater and 40% or less, 15% or greater and 40% or less, 20% or greater and 40% or less, 22% or greater and 40% or less, 24% or greater and 40% or less, or 25% or greater and 40% or less based on the total surface area of the coating layer. When the area of the second surface portion is less than the above-described range, the area of the first surface portion increases, reducing adhesive strength with a negative electrode, and when the area of the second surface portion is greater than the above-described range, adhesive strength with a positive electrode may be reduced. By adjusting the area of the second surface portion based on the total surface area of the coating layer as described above, wetting by an electrolyte liquid may also be improved while improving adhesive strength with a positive electrode and a negative electrode.

According to one embodiment of the present disclosure, positive electrode adhesive strength of the first surface portion may be greater than positive electrode adhesive strength of the second surface portion. Specifically, the first polymer binder included in the first surface portion may have more superior positive electrode adhesive strength than the second polymer binder included in the second surface portion. By adjusting the positive electrode adhesive strength of the first surface portion to be greater than positive electrode adhesive strength of the second surface portion, constant adhesive strength with a positive electrode is secured, and asymmetry between the positive electrode adhesive strength and negative electrode adhesive strength may be alleviated.

According to one embodiment of the present disclosure, negative electrode adhesive strength of the second surface portion may be greater than negative electrode adhesive strength of the first surface portion. Specifically, the second polymer binder included in the second surface portion may have more superior negative electrode adhesive strength than the first polymer binder included in the first surface portion. By adjusting the negative electrode adhesive strength of the second surface portion to be greater than the negative electrode adhesive strength of the first surface portion as described above, constant adhesive strength with a negative electrode is secured, and asymmetry between the positive electrode adhesive strength and negative electrode adhesive strength may be alleviated.

According to one embodiment of the present disclosure, the difference in adhesive strength between a positive electrode and a negative electrode in the dry adhesive strength of the coating layer may be 50 gf/20 mm or less. Specifically, the difference in adhesive strength between a positive electrode and a negative electrode in the dry adhesive strength of the coating layer may be 0 gf/20 mm or greater and 50 gf/20 mm or less, or 0 gf/20 mm or greater and 32 gf/20 mm or less. By adjusting the difference in adhesive strength between a positive electrode and a negative electrode in the dry adhesive strength of the coating layer in the above-described range, battery stability may be improved.

According to one embodiment of the present disclosure, the difference in adhesive strength between a positive electrode and a negative electrode in the wet adhesive strength of the coating layer may be 25 gf/20 mm or less. Specifically, the difference in adhesive strength between a positive electrode and a negative electrode in the wet adhesive strength of the coating layer may be 0 gf/20 mm or greater and 25 gf/20 mm or less, or 0 gf/20 mm or greater and 15 gf/20 mm or less. By adjusting the difference in adhesive strength between a positive electrode and a negative electrode in the wet adhesive strength of the coating layer in the above-described range, battery stability may be improved.

According to one embodiment of the present disclosure, the coating layer may have an average thickness of 0.5 µm or greater and 1.0 µm or less. When the coating layer becomes thick outside the average thickness range, cell resistance may increase. In addition, when the average thickness is greater than the above-described range, the area to be adhered increases after a lamination process, and as a result, wetting by an electrolyte liquid may be reduced, and when the average thickness is less than the above-described range, the area to be adhered decreases after a lamination process, and as a result, adhesive strength may be reduced.

In one embodiment of the present disclosure, the thicknesses of the polymer substrate, the coating layer and/or the like may be measured using a contact-type thickness measurement device. As an example of the contact-type thickness measurement device, VL-50S-B manufactured by Mitutoyo Corporation may be used.

According to one embodiment of the present disclosure, the content of the first polymer binder may be 10 parts by weight or greater and 15 parts by weight or less with respect to 100 parts by weight of the coating layer. Specifically, the content of the first polymer binder may be 11 parts by weight or greater and 14 parts by weight or less with respect to 100 parts by weight of the coating layer. By adjusting the content of the first polymer binder in the above-described range, wetting and adhesive strength may be improved.

According to one embodiment of the present disclosure, the content of the second polymer binder may be 10 parts by weight or greater and 15 parts by weight or less with respect to 100 parts by weight of the coating layer. Specifically, the content of the second polymer binder may be 11 parts by weight or greater and 14 parts by weight or less with respect to 100 parts by weight of the coating layer. By adjusting the content of the second polymer binder in the above-described range, wetting and adhesive strength may be improved.

One embodiment of the present disclosure provides a method for manufacturing a separator for an electrochemical device, the method including providing a coating layer by alternately coating a first slurry including a first polymer binder and a second slurry including a second polymer binder on at least one surface of a porous polymer substrate, wherein a first surface portion including the first polymer binder and a second surface portion including the second polymer binder are alternately arranged on a surface of the coating layer.

The method for manufacturing a separator for an electrochemical device according to one embodiment of the present disclosure forms a coating layer having a constant thickness and a constant pattern by controlling a loading amount during coating, and an increase in resistance caused by a decrease in wetting may be suppressed while maintaining adhesive strength with a positive electrode and a negative electrode.

The method for manufacturing a separator 100 for an electrochemical device, which is one embodiment of the present disclosure, will be specifically described. Furthermore, in the present specification, parts overlapping with the description provided in the separator for an electrochemical device will not be included.

According to one embodiment of the present disclosure, the providing of a coating layer may be performed using gravure coating, spray coating, slot die coating, bar coating or roll coating. Preferably, the providing of a coating layer may be performed using gravure coating.

According to one embodiment of the present disclosure, the loading amount of the first slurry for a coating layer may be greater than 7 g/m² and 10 g/m² or less. When the loading amount is greater than the above-described range, the area to be adhered increases after a lamination process, and as a result, wetting by an electrolyte liquid may be reduced, and when the loading amount is less than the above-described range, the area to be adhered decreases after a lamination process, and as a result, adhesive strength may be reduced.

According to one embodiment of the present disclosure, the loading amount of the second slurry for a coating layer may be 4 g/m² or greater and 7 g/m² or less. When the loading amount is greater than the above-described range, the area to be adhered increases after a lamination process, and as a result, wetting by an electrolyte liquid may be reduced, and when the loading amount is less than the above-described range, the area to be adhered decreases after a lamination process, and as a result, adhesive strength may be reduced.

One embodiment of the present disclosure provides an electrochemical device including: a positive electrode; a negative electrode; and any one of the separators interposed between the positive electrode and the negative electrode.

The electrochemical device according to one embodiment of the present disclosure includes a coating layer that forms a constant pattern using different polymer binders, and accordingly, adhesive strength with the positive electrode and the negative electrode may be improved while improving wetting by an electrolyte liquid.

According to one embodiment of the present disclosure, the positive electrode is provided with a positive electrode current collector, and a positive electrode active material layer including a positive electrode active material, a conductor and a binder resin on at least one surface of the positive electrode current collector. The positive electrode active material may include one type of a layered compound or a compound substituted with one or more transition metals such as lithium manganese composite oxide (LiMn₂O₄, LiMnO₂ and the like), lithium cobalt oxide (LiCoO₂) or lithium nickel oxide (LiNiO₂); lithium manganese oxide such as a chemical formula of Li₁₊ₓMn₂₋ₓO₄ (herein, x is from 0 to 0.33), LiMnO₃, LiMn₂O₃ or LiMnO₂; lithium copper oxide (Li₂CuO₂); vanadium oxide such as LiV₃O₈, LiV₃O₄, V₂O₅ or Cu₂V₂O₇; Ni-site-type lithium nickel oxide represented by a chemical formula of LiNi₁₋ₓMₓO₂ (herein, M=Co, Mn, Al, Cu, Fe, Mg, B or Ga, and x=0.01 to 0.3); lithium manganese composite oxide represented by a chemical formula of LiMn₁₋ₓMₓO₂ (herein, M=Co, Ni, Fe, Cr, Zn or Ta, and x=0.01 to 0.1) or Li₂Mn₃MO₈ (herein, M=Fe, Co, Ni, Cu or Zn); LiMn₂O₄ in which some of Li in the chemical formula are substituted with alkaline earth metal ions; a disulfide compound; and Fe₂(MoO₄)₃, or a mixture of two or more types thereof.

According to one embodiment of the present disclosure, the negative electrode is provided with a negative electrode current collector, and a negative electrode active material layer including a negative electrode active material, a conductor and a binder resin on at least one surface of the negative electrode current collector. The negative electrode may include, as the a negative electrode active material, one type selected from among lithium metal oxide; carbon such as non-graphitizable carbon or graphite-based carbon; LiₓFe₂O₃ (0≤x≤1), LiₓWO₂ (0≤x≤1), silicon-based material such as Si, SiOₓ (0<x<2), SiC and Si alloy; metal composite oxide such as SnₓMe₁₋ₓMe'_{y}O_{z} (Me: Mn, Fe, Pb, Ge; Me': Al, B, P, Si, elements of groups 1, 2 and 3 of the periodic table, halogen; 0<x≤1; 1≤y≤3; 1≤z≤8); lithium metal; lithium alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymer such as polyacetylene; Li-Co-Ni-based material; and titanium oxide, or a mixture of two or more types thereof.

According to one embodiment of the present disclosure, the positive electrode current collector and/or the negative electrode current collector are not particularly limited as long as they have high conductivity without causing chemical changes to the electrochemical device, and specifically, stainless steel, copper, aluminum, nickel, titanium, baked carbon, or aluminum or stainless steel of which surface is treated with carbon, nickel, titanium, silver or the like, and the like may be used.

According to one embodiment of the present disclosure, the conductor may be any one selected from the group consisting of graphite, carbon black, carbon fiber or metal fiber, metal powder, conductive whisker, conductive metal oxide, carbon nanotube, activated carbon and polyphenylene derivative, or a mixture of two or more types of conductive materials thereof. The carbon nanotube has a graphite sheet in the shape of a cylinder with a nano-sized diameter and has a sp² bonding structure, and exhibits properties of a conductor or a semiconductor depending on the angle and the structure at which the graphite sheet is rolled. The carbon nanotube may be classified into a single-walled carbon nanotube (SWCNT), a double-walled carbon nanotube (DWCNT) and a multi-walled carbon nanotube (MWCNT) depending on the number of bonds forming the wall, and these carbon nanotubes may be properly selected depending on the application of a dispersion. More specifically, the conductor may be one type selected from the group consisting of natural graphite, artificial graphite, super-p, acetylene black, ketjen black, channel black, furnace black, lamp black, thermal black, denka black, aluminum powder, nickel powder, zinc oxide, potassium titanate and titanium oxide, or a mixture of two or more types of conductive materials thereof.

According to one embodiment of the present disclosure, as the binder resin, binder resins commonly used in an electrode in the art may be used. Nonlimiting examples of such a binder resin may include polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose and the like, but are not limited thereto.

According to one embodiment of the present disclosure, an electrode assembly includes a positive electrode, a negative electrode and a separator interposed between the positive electrode and the negative electrode, and an electrochemical device may be manufactured by inserting the electrode assembly into a proper case, and injecting an electrolyte liquid thereinto.

According to one embodiment of the present disclosure, the electrolyte liquid is obtained by dissolving or dissociating a salt having a structure such as A⁺B⁻ in which A⁺ includes an ion consisting of an alkali metal cation such as Li⁺, Na⁺ or K⁺ or a combination thereof and B⁻ includes an ion consisting of an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂ or C(CF₂SO₂)₃⁻ or a combination thereof, in an organic solvent consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone (γ-butyrolactone) or a mixture thereof, however, the electrolyte liquid is not limited thereto.

One embodiment of the present disclosure provides a battery module including a battery including the electrode assembly as a unit cell, a battery pack including the battery module, and a device including the battery pack as a power source. Specific examples of the device may include power tools powered by an electric motor; electric motor vehicles including electric vehicles (EV), hybrid electric vehicles (HEV), plug-in hybrid electric vehicles (PHEV) and the like; electric two-wheeled bicycles including electric bicycles (E-bike) and electric scooters (E-scooter); electric golf carts; systems for power storage and the like, but are not limited thereto.

### Mode for Invention

Hereinafter, the present disclosure will be described in detail with reference to examples in order to specifically describe the present disclosure. However, examples according to the present disclosure may be modified to various different forms, and the scope of the present disclosure is not construed as being limited to the examples described below. Examples of the present specification are provided in order to more fully describe the present disclosure to those having average knowledge in the art.

### <Example 1>

A polyethylene resin (weight average molecular weight 900,000) was extruded, and a porous polymer substrate (total thickness about 9 µm, porosity 40% by volume) was prepared using a wet method.

Al₂O₃ powder having a D50 particle diameter of 400 nm was prepared as inorganic particles. A copolymer of polyvinylidene fluoride and hexafluoropropylene (PVdF-HFP) (LBG4430LX, Arkema) was prepared as a first polymer binder, and sodium carboxymethyl cellulose (CMC-Na) (SG-L02, GL Chem.) was prepared as a dispersant. The inorganic particles, the first polymer binder and the dispersant prepared above were added to water in a weight ratio of 85:14:1, and then the inorganic particles were crushed and dispersed to prepare a first slurry for a coating layer.

Al₂O₃ powder having a D50 particle diameter of 400 nm was prepared as inorganic particles. An acryl-based emulsion (CSB-130, Toyo Ink Co., Ltd.) and a copolymer of polyvinylidene fluoride and hexafluoropropylene (PVdF-HFP) (LBG4430LX, Arkema) were prepared as a second polymer binder, and sodium carboxymethyl cellulose (CMC-Na) (SG-L02, GL Chem.) was prepared as a dispersant. The inorganic particles, the second polymer binder (acryl-based emulsion:PVdF-HFP=5:5) and the dispersant prepared above were added to water in a weight ratio of 85:14:1, and then the inorganic particles were crushed and dispersed to prepare a second slurry for a coating layer.

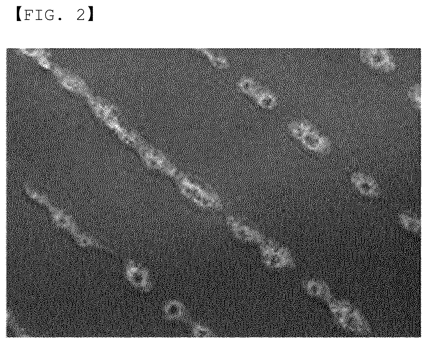

The first slurry and the second slurry were alternately arranged and coated on the porous polymer substrate using a gravure coating method, and dried to form a coating layer so that the coating layer thickness became 0.5 µm or greater and 1.0 µm or less. Herein, the loading amount of the first slurry was 9.5 g/m², and the loading amount of the second slurry was 4.5 g/m², as a result, the second surface portion area was 25% (FIG. 2).

### <Example 2>

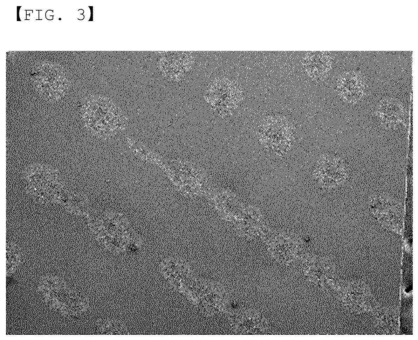

A coating layer was prepared in the same manner as in Example 1, except that the loading amount of the first slurry was 7.5 g/m², and the loading amount of the second slurry was 6.5 g/m², as a result, the second surface portion area was 40% (FIG. 3).

### <Comparative Example 1>

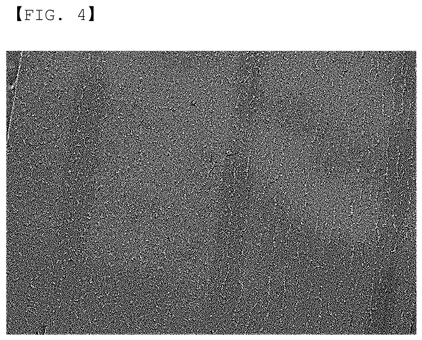

A coating layer in which a pattern was not formed by using only the second slurry without using the first slurry in Example 1 was prepared (FIG. 4).

### <Comparative Example 2>

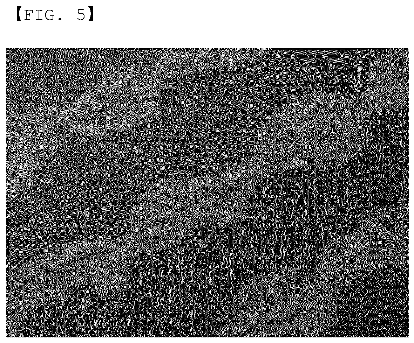

A coating layer was prepared in the same manner as in Example 1, except that the loading amount of the first slurry was 6.5 g/m², and the loading amount of the second slurry was 7.5 g/m², as a result, the second surface portion area was 60% (FIG. 5).

### <Comparative Example 3>

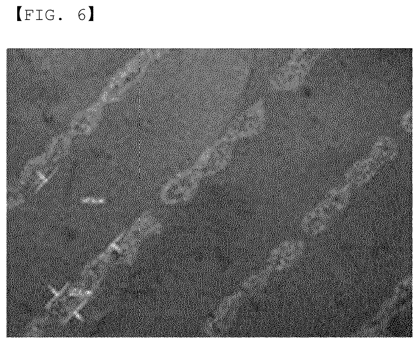

A coating layer was prepared in the same manner as in Example 1, except that a thickness of the coating layer was adjusted to 1.5 µm (FIG. 6).

### <Comparative Example 4>

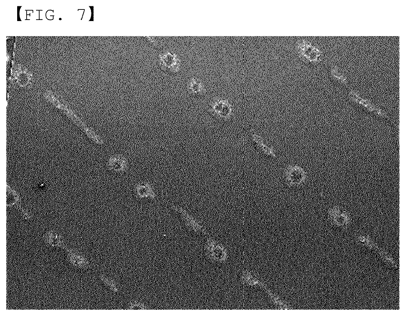

A coating layer was prepared in the same manner as in Example 1, except that an acryl-based emulsion (CSB-130, Toyo Ink Co., Ltd.) was used as the first polymer binder instead of the copolymer of polyvinylidene fluoride and hexafluoropropylene (PVdF-HFP) (LBG4430LX, Arkema) (FIG. 7).

**[Table 1]**

| | | Example 1 | Example 2 | Comparative Example 1 | Comparative Example 2 | Comparative Example 3 | Comparative Example 4 |
|---|---|---|---|---|---|---|---|
| First Slurry | First Polymer Binder | PVDF | PVDF | - | PVDF | PVDF | Acryl-based |
| | Inorganic Particles | Al₂O₃ | Al₂O₃ | - | Al₂O₃ | Al₂O₃ | Al₂O₃ |
| Second Slurry | Second Polymer Binder | PVDF+Acryl-based | PVDF+Acryl-based | PVDF+Acryl -based | PVDF+Acryl -based | PVDF+Acryl-based | PVDF+Acryl-based |
| | Inorganic Particles | Al₂O₃ | Al₂O₃ | Al₂O₃ | Al₂O₃ | Al₂O₃ | Al₂O₃ |
| Coating Layer Thickness (µm) | | 0.5~1.0 | 0.5~1.0 | 0.5~1.0 | 0.5~1.0 | 1.5 | 0.5~1.0 |
| Loading Amount (g/m²) | First Slurry | 9.5 | 7.5 | - | 6.5 | 7.5 | 7.5 |
| | Second Slurry | 4.5 | 6.5 | 6.5 | 7.5 | 6.5 | 6.5 |
| Second Surface Portion Area (%) | | 25 | 40 | - | 60 | 40 | 40 |

### [Measurement of Coating Layer Surface Area]

In order to measure the area of the coating layer surface portion of each of Examples 1 and 2, and Comparative Examples 1 to 4, the surface EDAX F-peak was analyzed, and the area was measured.

The area of the coating layer surface portion of each of Examples 1 and 2, and Comparative Example 1 to 4 may be identified according to FIGS. 2 to 7.

### <Manufacture of Electrochemical Device>

### 1) Preparation of Positive Electrode

A positive electrode active material (LiNi_{0.8}Mn_{0.1}Co_{0.1}O₂), a conductor (carbon black), a dispersant (N-methylpyrrolidone, ADC-01, LG Chem.) and a binder resin (mixture of PVDF-HFP and PVDF) were mixed with water in a weight ratio of 97.5:0.7:0.14:1.66 to prepare a slurry for a positive electrode active material layer in which the components other than water had a concentration of 50 wt%. Then, the slurry was coated on a surface of an aluminum thin film (thickness 10 µm), and dried to prepare a positive electrode having a positive electrode active material layer (thickness 120 µm).

### 2) Preparation of Negative Electrode

Graphite (blend of natural graphite and artificial graphite), conductor (carbon black), a dispersant (polyvinylpyrrolidone, Junsei Chemical CO., Ltd. of Japan) and a binder resin (mixture of PVDF-HFP and PVDF) were mixed with water in a weight ratio of 97.5:0.7:0.14:1.66 to prepare a slurry for a negative electrode active material layer in which the components other than water had a concentration of 50 wt%. Then, the slurry was coated on a surface of a copper thin film (thickness 10 µm), and dried to prepare a negative electrode having a negative electrode active material layer (thickness 120 µm).

### <Experimental Example>

### [Measurement of Dry Adhesive Strength]

The separator of each of Examples and Comparative Examples was cut to a size of 70 mm (length)x20 mm (width), and the prepared electrode and the separator were laminated under a condition of 60°C, 6.5 MPa and 1 sec using a press to prepare a specimen. The prepared specimen was attached to a glass plate using a double-sided tape for fixing, and herein, the electrode was placed to face the glass plate. The separator portion of the specimen was peeled at an angle of 180° at a rate of 150 mm/min at 25°C, strength of each of the positive electrode and the negative electrode was measured, and the results are summarized in the following Table 2.

### [Measurement of Wet Adhesive Strength]

The separator of each of Examples and Comparative Examples was cut to a size of 70 mm (length)x20 mm (width), and the prepared electrode and the separator were laminated under a condition of 60°C, 6.5 MPa and 1 sec using a press to prepare a specimen. The prepared specimen was loaded into a battery case together with an electrolyte liquid, and kept for 4 hours to impregnate the specimen with the electrolyte liquid. As the electrolyte liquid, an electrolyte liquid in which ethylene carbonate and ethylmethyl carbonate were mixed in a volume ratio of 7:3 and LiPF₆ was prepared at a concentration of 1 M was used. After that, the specimen was taken out of the case, and then attached to a glass plate using a double-sided tape for fixing, and herein, the electrode was placed to face the glass plate. The separator portion of the specimen was peeled at an angle of 90° at a rate of 200 mm/min at 25°C, strength of each of the positive electrode and the negative electrode was measured, and the results are summarized in the following Table 2.

### [Measurement of Electrical Resistance]

Each of the separators was interposed between SUS and an electrolyte liquid was injected thereinto to manufacture a coin cell, and resistance (ER) was measured using the method of EIS. Herein, frequency was set to a range of 100,000 Hz to 10,000 Hz.

**[Table 2]**

| | | Example 1 | Example 2 | Comparative Example 1 | Comparative Example 2 | Comparative Example 3 | Comparative Example 4 |
|---|---|---|---|---|---|---|---|
| Dry Adhesive Strength (gf/20 mm) | Positive Electrode Adhesive Strength | 47 | 27 | 5 | 7 | 50 | 5 |
| | Negative Electrode Adhesive Strength | 15 | 22 | 65 | 45 | 45 | 55 |
| Wet Adhesive Strength (gf/20 mm) | Positive Electrode Adhesive Strength | 25 | 20 | 4 | 6 | 40 | 5 |
| | Negative Electrode Adhesive Strength | 10 | 15 | 30 | 22 | 37 | 35 |
| Electrical Resistance (ER, Ω) | | 0.75 | 0.72 | 0.91 | 0.82 | 1.2 | 0.98 |

According to Table 2, it may be identified that, in Examples 1 and 2 including the second surface portion area of 40% or less, positive electrode and negative electrode dry adhesive strength and positive electrode and negative electrode wet adhesive strength were all superior, and resistance was low.

In contrast, Comparative Example 1 includes only the second polymer on the coating layer surface portion without forming a pattern, causing problems of poor positive electrode adhesive strength and an increase in resistance compared to Examples.

It may be seen that Comparative Example 2 has the second surface portion area of greater than 40%, resulting in poor positive electrode adhesive strength, and Comparative Example 2 has problems of poor wet adhesive strength, and an increase in resistance compared to Examples.

Comparative Example 3 has a coating layer thickness of greater than 0.5 µm to 1.0 µm, and, although adhesive strength is favorable, has a problem in that electrical resistance significantly increases.

Comparative Example 4 uses an acryl-based binder as the first polymer binder, causing a problem in that electrical resistance increases since a film is formed when impregnated with an electrolyte liquid.

### [Measurement of Wetting]

Each of the separators of Examples and Comparative Examples was immersed in an electrolyte liquid while being placed vertically after the lamination process, and the degree to which the electrolyte liquid was sucked up by a capillary phenomenon was measured.

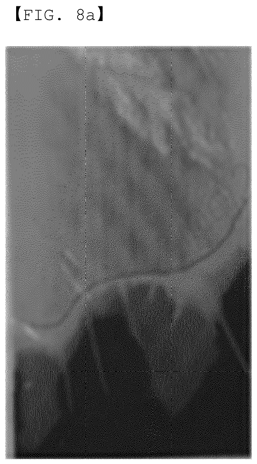

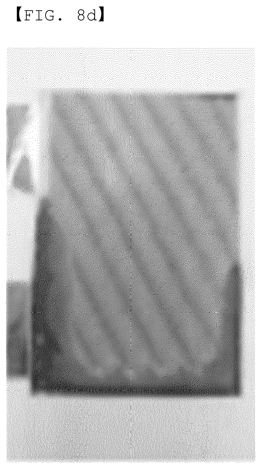

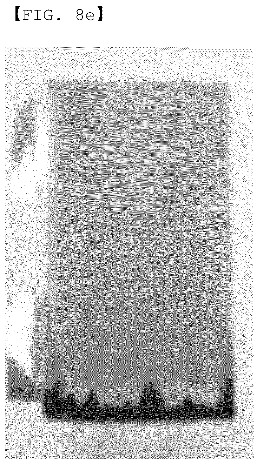

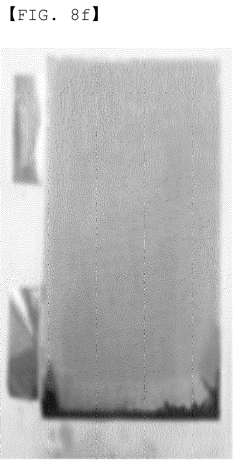

FIGS. 8a to 8f sequentially show wetting states of Examples 1 and 2 of the present disclosure, and Comparative Examples 1 to 5.

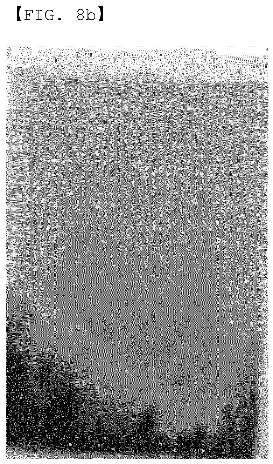

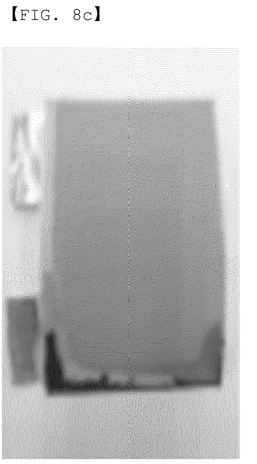

According to FIGS. 8a to 8f, it may be identified that FIGS. 8a and 8b have excellent wetting compared to the Comparative Examples of FIGS. 8c to 8f, since the degree to which the electrolyte liquid was sucked up is greater.

### [Comparison between Positive Electrode/Negative Electrode Adhesive Strength by Binder]

**[Table 3]**

| Example 1 | Positive Electrode Adhesive Strength (gf/20 mm) | Negative Electrode Adhesive Strength (gf/20 mm) |
|---|---|---|
| First Polymer Binder | 55 | 12 |
| Second Polymer Binder | 10 | 65 |

According to Table 3, the first polymer binder has excellent positive electrode adhesive strength compared to the second polymer binder, and therefore, excellent positive electrode adhesive strength of the first polymer binder may be exhibited when the binders are alternately arranged on the coating layer according to the present disclosure.

In addition, the second polymer binder has excellent negative electrode adhesive strength compared to the first polymer binder, and therefore, excellent negative electrode adhesive strength of the second polymer binder may be exhibited when the binders are alternately arranged on the coating layer according to the present disclosure.

Accordingly, the separator for an electrochemical device according to one embodiment of the present disclosure may prevent an increase in resistance by improving wetting while improving dry adhesive strength and wet adhesive strength through alternately arranging the first surface portion and the second surface portion on the coating layer surface, controlling the surface area, and controlling the binder type.

### [Reference Numeral]

- 100:: Separator
- 110:: Porous Polymer Substrate
- 130:: Coating Layer
- 131:: First Surface Portion
- 133:: Second Surface Portion

## Claims

1. A separator for an electrochemical device, the separator comprising:
a porous polymer substrate; and
a coating layer provided on at least one surface of the porous polymer substrate and including a first polymer binder, a second polymer binder and inorganic particles,
wherein a first surface portion including the first polymer binder and a second surface portion including the second polymer binder are alternately arranged on a surface of the coating layer.

2. The separator of claim 1, wherein the first polymer binder is a fluorine-based polymer binder.

3. The separator of claim 1, wherein the second polymer binder is a hybrid polymer of a fluorine-based polymer binder and an acryl-based polymer binder.

4. The separator of claim 1, wherein an area of the second surface portion is 40% or less based on a total surface area of the coating layer.

5. The separator of claim 1, wherein positive electrode adhesive strength of the first surface portion is greater than positive electrode adhesive strength of the second surface portion.

6. The separator of claim 1, wherein negative electrode adhesive strength of the second surface portion is greater than negative electrode adhesive strength of the first surface portion.

7. The separator of claim 1, wherein the coating layer has an average thickness of 0.5 µm or greater and 1.0 µm or less.

8. The separator of claim 1, wherein a content of the first polymer binder is 10 parts by weight or greater and 15 parts by weight or less with respect to 100 parts by weight of the coating layer.

9. The separator of claim 1, wherein a content of the second polymer binder is 10 parts by weight or greater and 15 parts by weight or less with respect to 100 parts by weight of the coating layer.

10. A method for manufacturing a separator for an electrochemical device, the method comprising:
providing a coating layer by alternately coating a first slurry including a first polymer binder and a second slurry including a second polymer binder on at least one surface of a porous polymer substrate,
wherein a first surface portion including the first polymer binder and a second surface portion including the second polymer binder are alternately arranged on a surface of the coating layer.

11. The method of claim 10, wherein the providing of a coating layer is performed using gravure coating, spray coating, slot die coating, bar coating or roll coating.

12. The method of claim 10, wherein a loading amount of the first slurry for a coating layer is greater than 7 g/m² and 10 g/m² or less.

13. The method of claim 10, wherein a loading amount of the second slurry for a coating layer is 4 g/m² or greater and 7 g/m² or less.

14. An electrochemical device comprising:
a positive electrode;
a negative electrode; and
the separator of claim 1 interposed between the positive electrode and the negative electrode.
